# DEMANDE DE BREVET EUROPEEN

(11) **EP 4 759 570 A1**
(43) Date de publication de la demande: **17.06.2026**
(21) Numéro de dépôt: 24315581.9
(22) Date de dépôt: 16.12.2024
(51) Int. Cl.: B60D 1/04

(54) **SYSTÈME D'ATTELAGE À DOUBLE SÉCURITÉ**

(71) Demandeur: Pommier, 95250 Beauchamp (FR)
(72) Inventeur: Caubel, M. Laurent, 95270 Luzarches (FR)
(74) Mandataire: Weinstein Services & Conseils

(57) **Abrégé**

L'invention porte principalement sur un système d'attelage (1) à double sécurité comprenant un crochet d'attelage (3) monté à pivotement dans un bâti (2) autour d'un axe (15) entre une position d'accouplement et une position de séparation, le système (1) comprenant en outre des moyens de dégagement (9) de moyens de blocage (6) et des moyens de délivrance (10) exerçant une force de délivrance sur des moyens de rappel élastique (7) du crochet (3) dans sa position d'accouplement, laquelle force de délivrance est antagoniste et supérieure à la force de maintien du crochet (3) dans sa position d'accouplement exercée par lesdits moyens de rappel élastique (7), les moyens de dégagement (9) et les moyens de délivrance (10) étant actionnés successivement et de manière continue pour amener le crochet (3) vers sa position de séparation.

## Description

### DOMAINE TECHNIQUE

L'invention porte sur un système d'attelage pour remorque comprenant une double sécurité pour éviter le désaccouplement intempestif dudit attelage.

### ART ANTERIEUR ET INCONVENIENTS DE L'ART ANTERIEUR

Les systèmes d'attelage pour accrocher des remorques comprennent classiquement un crochet monté dans un bâti solidaire d'un véhicule à moteur, entre une position de libération - permettant au crochet de s'engager ou de se désengager dans un anneau solidaire de la remorque - et une position d'accouplement dans laquelle le crochet demeure lié à l'anneau, assurant l'attelage de la remorque au véhicule à moteur.

Pour éviter tout désengagement intempestif du crochet qui entrainerait une libération indésirable de la remorque, le système d'attelage comprend au moins une sécurité dont les rôle est de maintenir le crochet dans sa position d'accouplement. Selon la norme ECE R55 concernant les accouplements mécaniques de véhicules à moteur, de tels systèmes d'attelage à crochets doivent être muni d'une double sécurité qui doivent être désengagées et successivement par l'utilisateur.

Bien que sécuritaire, de tels systèmes d'attelage sont fastidieux à utiliser.

### OBJECTIF DE L'INVENTION

L'invention vise ainsi à proposer un système d'attelage sécuritaire et plus simple à utiliser.

### EXPOSE DE L'INVENTION

À cet effet, l'invention concerne un système d'attelage comprenant un bâti, un crochet d'attelage monté à pivotement dans le bâti autour d'un axe entre une position d'accouplement et une position de séparation, et un dispositif de libération sécurisée du crochet monté dans le bâti et relié au crochet, lequel dispositif de libération sécurisée comprend des moyens de maintien sécurisé du crochet dans sa position d'accouplement, comportant :
- des moyens de blocage du pivotement du crochet vers sa position de séparation, lesquels moyens de blocage sont actionnables entre une position de blocage et une position de déblocage, et
- des moyens de rappel élastique exerçant une force de maintien du crochet dans sa position d'accouplement,
lequel dispositif de libération sécurisée comprend en outre des moyens de libération des moyens de maintien sécurisé actionnables de manière continue entre une position de maintien sécurisé du crochet dans sa position d'accouplement dans laquelle les moyens de blocage sont dans leur position de blocage et les moyens de rappel élastique exercent la force de maintien du crochet dans sa position d'accouplement, et une position de libération dudit crochet dans sa position de séparation dans laquelle les moyens de blocage sont dans leur position de déblocage, en passant par une position intermédiaire de dégagement dans laquelle les moyens de blocage sont en position de déblocage et les moyens de rappel élastique continuent à exercer la force de maintien du crochet dans sa position d'accouplement, les moyens de libération sécurisée comportant :
- des moyens de dégagement des moyens de blocage vers leur position de déblocage lorsque les moyens de libération se déplacent depuis leur position de maintien sécurisé vers leur position intermédiaire de dégagement, les moyens de rappel élastique exerçant la force de maintien du crochet dans sa position d'accouplement,
- des moyens de délivrance des moyens de rappel élastique exerçant une force de délivrance sur lesdits moyens de rappel élastique depuis la position intermédiaire desdits moyens de libération sécurisée jusqu'à leur position de libération, laquelle force de délivrance est antagoniste et supérieure à la force de maintien exercée par lesdits moyens de rappel élastique,
les moyens de libération étant configurés pour que les moyens de dégagement et les moyens de délivrance soient actionnés successivement et de manière continue.

Le système d'attelage de l'invention peut également comporter les caractéristiques optionnelles suivantes considérées isolément ou selon toutes les combinaisons techniques possibles :
- Les moyens de délivrance exercent automatiquement la force de délivrance sur les moyens de rappel élastique à partir d'une position de bascule des moyens de libération située entre leur position intermédiaire et leur position de libération.
- Les moyens de libération sont montés à pivotement dans le bâti, et en ce que la force de délivrance exerce un bras de levier autour du pivot des moyens de libération et de l'axe de pivotement du crochet lors de l'actionnement de la position intermédiaire vers la position de libération des moyens de libération.
- les moyens de libération sont reliés à pivotement au crochet, et en ce que les moyens de délivrance des moyens de rappel élastique comprennent au moins deux organes de délivrance reliés entre eux à pivotement et actionnables entre :
   - Une configuration sensiblement alignée lorsque les moyens de libération sont entre leur position de maintien sécurisé et leur position intermédiaire, et
   - Une configuration non alignée lorsque les moyens de libération sont entre leur position intermédiaire et leur position de libération,
l'actionnement des organes de délivrance de leur position alignée vers leur position non alignée entraînant concomitamment audit actionnement le pivotement du crochet autour de son axe depuis sa position d'accouplement vers sa position de séparation.
- Les moyens de délivrance comprennent au moins une première biellette dont une extrémité est reliée à pivotement au crochet, et une seconde biellette dont une extrémité est reliée à pivotement au bâti, lesquelles biellettes forment tout ou partie des organes de délivrance et sont en outre reliées à pivotement entre elles par leurs extrémités opposées respectives et actionnables entre la configuration alignée lorsque les moyens de libération sont entre leur position de maintien sécurisé et leur position intermédiaire, et la configuration non-alignée concomitamment à l'actionnement des moyens de libération de leur position intermédiaire vers leur position de libération.
- Les moyens de délivrance comprennent une troisième biellette parallèle à la première biellette et dont les extrémités sont reliées à pivotement respectivement à la deuxième biellette et au crochet.
- Le dispositif de libération sécurisée comprend une poignée d'actionnement des moyens de libération entre leur position de maintien sécurisée et leur position de libération, laquelle poignée est reliée à pivotement aux moyens de délivrance par le pivot des moyens de libération.
- Les moyens de blocage comprennent un élément de blocage muni d'au moins un axe de blocage, lequel élément de blocage est actionnable à translation par les moyens de dégagement entre la position de blocage dans laquelle l'axe de blocage est en regard de la première biellette des moyens de délivrance, et la position de déblocage dans laquelle l'axe de blocage est dégagé de ladite première biellette.
- L'élément de blocage comprend un second axe de blocage, les deux axes étant parallèles entre eux et solidarisés par une platine de liaison de l'élément de blocage, et les moyens de dégagement comprennent une rainure en forme de rampe ménagée dans la paroi de la poignée dans laquelle le second axe est logé lorsque les moyens de libération sont entre leur position de maintien sécurisé et leur position intermédiaire, les moyens de blocage étant dans leur position de déblocage lorsque le second axe est à l'extrémité libre de la rampe.
- Le châssis et la poignée d'actionnement comprennent respectivement un premier et un second plans de symétrie, lesquels premier et second plans de symétrie sont confondus.
- Les moyens de rappel élastique comprennent un axe logé dans le bâti et au moins un ressort en appui contre au moins la première biellette et le bâti.
- Les moyens de blocage comprennent un moyen de rappel élastique vers leur position de blocage.
- Les moyens de rappel élastique exercent la force de rappel contre les moyens de délivrance.

### PRESENTATION DES FIGURES

D'autres caractéristiques et avantages de l'invention ressortiront clairement de la description qui en est donnée ci-dessous, à titre indicatif et nullement limitatif, en référence aux figures annexées parmi lesquelles :
[Fig. 1] La figure 1 représente une vue en perspective du système d'attelage de l'invention dont le crochet est en position de séparation ;
[Fig. 2] La figure 2 représente une vue en perspective du système d'attelage de l'invention dont le crochet est en position d'accouplement ;
[Fig. 3] La figure 3 représente une vue en perspective du système d'attelage de l'invention à l'intérieur du bâti, le crochet étant dans sa position d'accouplement ;
[Fig. 4] La figure 4 représente une vue en perspective du système d'attelage de l'invention à l'intérieur du bâti, le crochet étant dans une position intermédiaire entre sa position d'accouplement et sa position de séparation ;
[Fig. 5] La figure 5 représente une vue en perspective du système d'attelage de l'invention à l'intérieur du bâti, le crochet étant dans sa position de séparation ;
[Fig. 6] La figure 6 représente une vue arrière du système d'attelage de la figure 3 ;
[Fig. 7] La figure 7 représente une vue arrière du système d'attelage de la figure 4 ;
[Fig. 8] La figure 8 représente une vue arrière du système d'attelage de la figure 5 ;
[Fig. 9] La figure 9 représente une vue en coupe du système d'attelage de la figure 3 ;
[Fig. 10] La figure 10 représente une vue en coupe du système d'attelage de la figure 4 ;
[Fig. 11] La figure 11 représente une vue en coupe du système d'attelage de la figure 5 ;
[Fig. 12] La figure 12 est une vue en perspective du système d'attelage selon un autre mode de réalisation.
[Fig. 13] La figure 13 est une autre vue en perspective du système d'attelage de la figure 12.

### DESCRIPTION DETAILLEE DE L'INVENTION

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement deux modes de réalisation de l'objet de l'invention mais qu'il peut exister d'autres modes de réalisation qui répondent à la définition de l'invention.

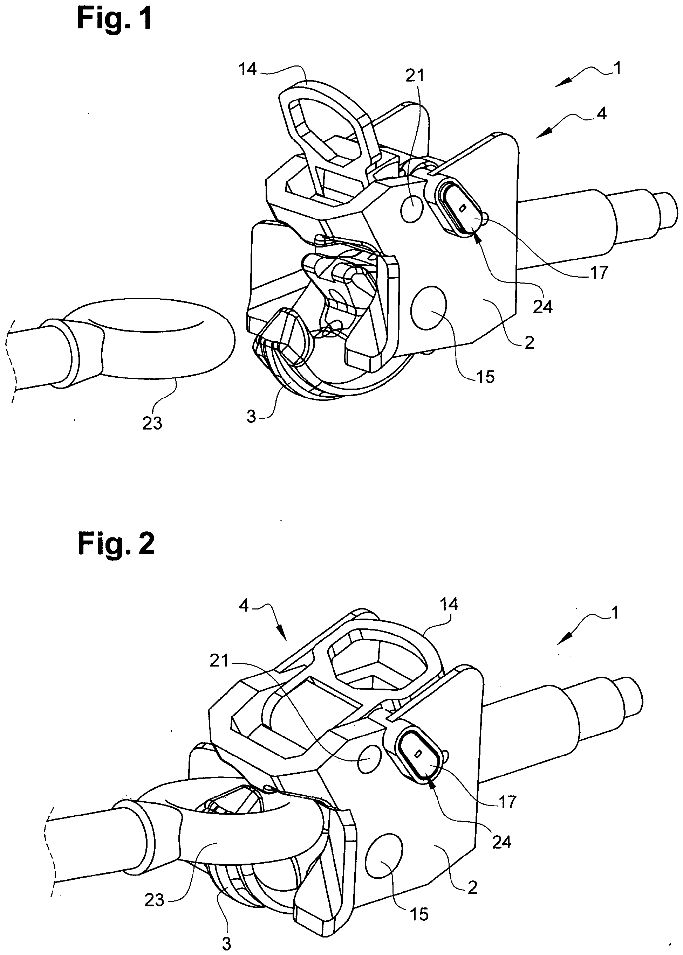

En référence aux figures 1 et 2, le système d'attelage 1 de l'invention comprend un bâti 2 - ou chape 2 - et un crochet 3 monté à pivotement dans le bâti 2 autour d'un axe de pivotement 15. Ce crochet 3 est actionnable entre une position dite de séparation représentée sur la figure 1 - dans laquelle un utilisateur peut à loisir insérer ou enlever un anneau d'attelage 23 - et une position dite d'accouplement dans laquelle l'anneau d'attelage 23 est disposé autour du crochet 3 de manière sécurisée, comme représenté sur la figure 2.

Afin de déplacer le crochet 3 de sa position d'accouplement vers sa position de séparation, le système d'attelage 1 comprend un dispositif de libération sécurisé 4 actionnable par un utilisateur. Pour être conforme à la norme ECE R55, le système d'attelage 1 de l'invention comprend une double sécurité pour maintenir le crochet 3 dans sa position d'accouplement, tant que l'utilisateur n'a pas actionné le dispositif de libération 4.

Le système d'attelage comprend ainsi une première sécurité formée par des moyens de blocage 6 du pivotement du crochet 3 vers sa position de séparation, lesquels moyens de blocage 6 sont actionnables via le dispositif de libération 4 entre une position de blocage et une position de déblocage.

Le système d'attelage 1 comprend en outre une seconde sécurité formée par des moyens de rappel élastique 7 qui exercent une force de maintien du crochet 3 dans sa position d'accouplement.

Ces moyens de blocage 6 et ces moyens de rappel élastique 7 forment des moyens de maintien sécurisé 5 du crochet 3 dans sa position d'accouplement.

Selon l'invention, le dispositif de libération sécurisée 4 comprend des moyens de libération 8 des moyens de maintien sécurisé 5. Ces moyens de libération 8 sont actionnables de manière continue :
- depuis une position de maintien sécurisé du crochet 3 dans sa position d'accouplement - dans laquelle les moyens de blocage 6 sont dans leur position de blocage et les moyens de rappel élastique 7 exercent la force de maintien du crochet 3 dans sa position d'accouplement,
- en passant par une position intermédiaire de dégagement dans laquelle les moyens de blocage 6 sont en position de déblocage et les moyens de rappel élastique 7 continuent à exercer la force de maintien du crochet 3 dans sa position d'accouplement,
- Jusqu'à une position de libération dudit crochet 3 dans sa position de séparation - dans laquelle les moyens de blocage 6 sont dans leur position de déblocage.

Pour assurer l'actionnement des moyens de maintien sécurisé 5, le dispositif de libération 8 comprend des moyens de dégagement 9 des moyens de blocage 6 vers leur position de déblocage lorsque les moyens de libération 8 se déplacent depuis leur position de maintien sécurisé vers leur position intermédiaire de dégagement, les moyens de rappel élastique 7 exerçant la force de maintien du crochet dans sa position d'accouplement.

Au surplus, les moyens de libération 8 comprend des moyens de délivrance 10 des moyens de rappel élastique 7, lesquels moyens de délivrance son configurés pour exercer une force de délivrance sur lesdits moyens de rappel élastique 7 depuis la position intermédiaire desdits moyens de libération sécurisée 8 jusqu'à leur position de libération, laquelle force de délivrance est antagoniste et supérieure à la force de maintien exercée par lesdits moyens de rappel élastique 7.

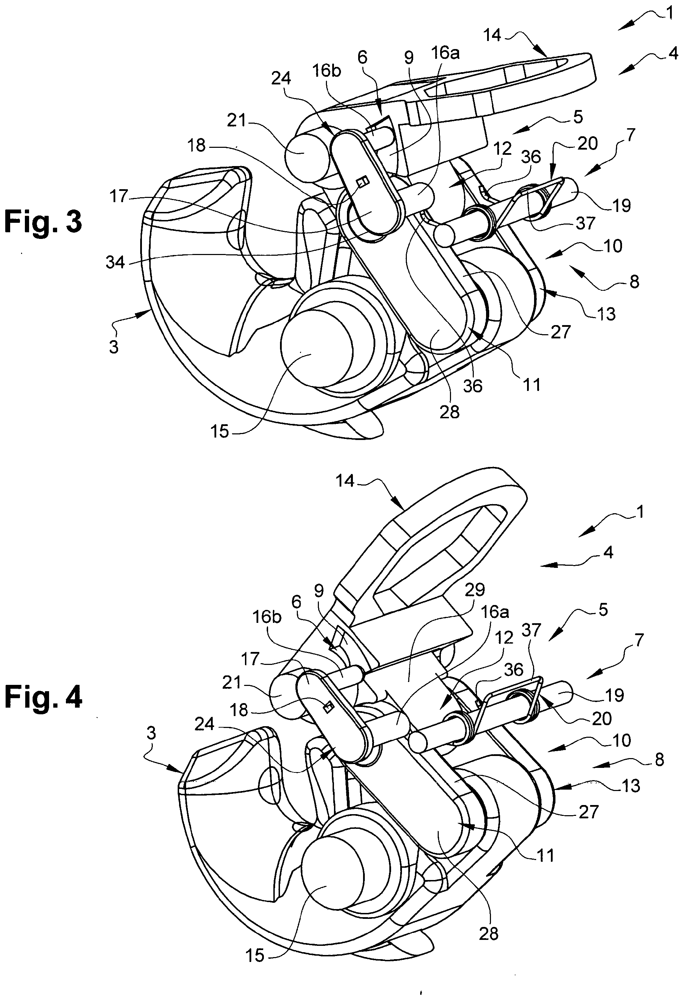

Comme cela sera décrit ci-après en référence aux figures 3 à 11, qui représente le système d'attelage 1 selon le mode préféré de l'invention, les moyens de libération 8 sont prévus pour que les moyens de dégagement 9 et les moyens de délivrance 10 soient actionnés successivement et de manière continue.

Les moyens de délivrance 10 comprennent deux organes de délivrance, et en particulier deux biellettes 11, 12 reliées entre elles à pivotement autour d'un axe 34. La première biellette 11 est en outre reliée à pivotement au crochet 3 et la seconde biellette 12 est en outre reliée à un axe de pivotement 21 solidaire du bâti 2.

Par ailleurs, pour équilibrer le déplacement des moyens de délivrance 10, ces derniers comprennent une troisième biellette 13 dont les extrémités sont respectivement reliées à pivotement au crochet 3 et à la première biellette 11. Plus précisément, les première et troisième biellettes 11, 13 sont parallèles entre elles.

Ainsi les moyens de libération 8 sont reliés à pivotement au crochet 3 et au bâti 2.

Les moyens de libération 8 comprennent une poignée d'actionnement 14 reliée à pivotement autour de l'axe de pivotement 21 de la seconde biellette 12, lequel axe - ou pivot 21 - est solidaire du bâti 2. La poignée 14 est donc reliée à pivotement à la deuxième biellette 12.

La première sécurité - c'est-à-dire les moyens de blocage 6 permettant de maintenir le crochet 3 dans sa position d'accouplement - va maintenant être décrite.

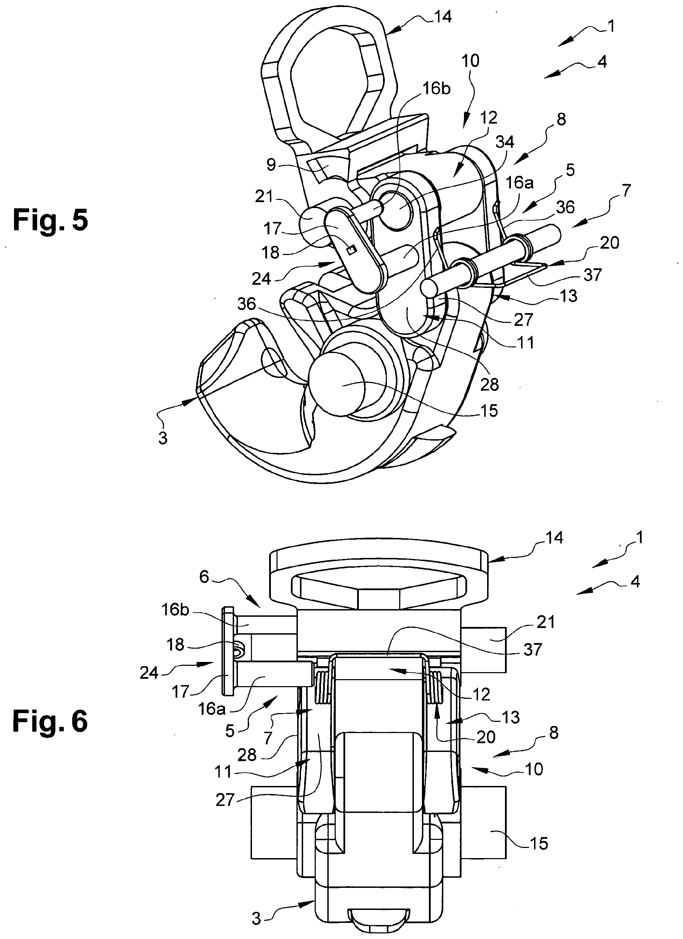

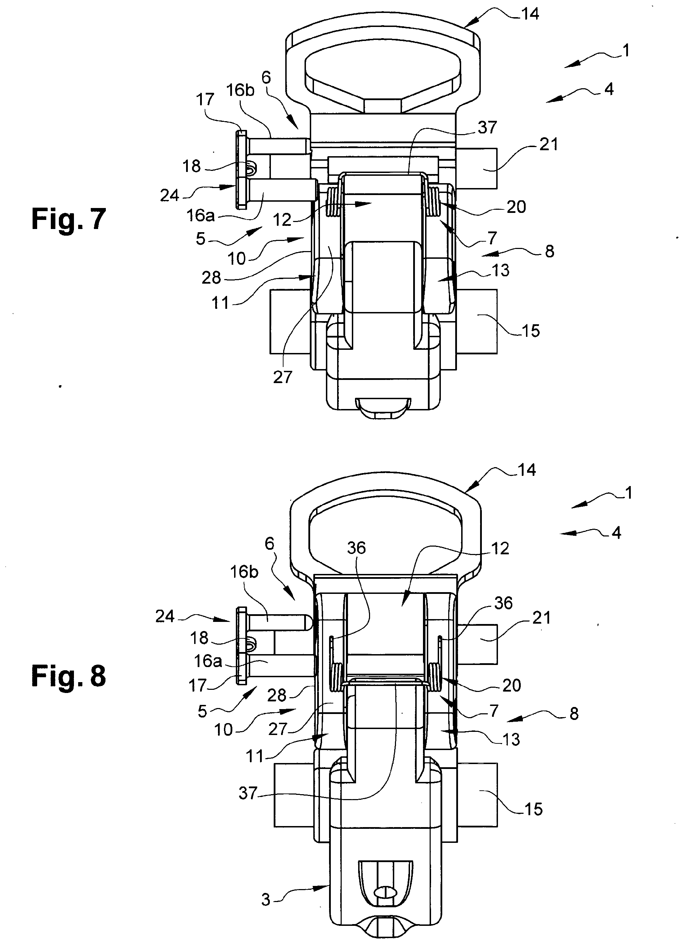

Les moyens de blocage 6 comprennent un élément de blocage 24 comportant un premier 16a et un second 16b axe de blocage parallèles entre eux et reliés par une platine de liaison 17 de laquelle font saillies les axes de blocage 16a, 16b. Ces axes de blocage 16a, 16b sont insérés dans le bâti 2 via des orifices traversant prévus à cet effet et sont mobiles à translation axiale dans le bâti 2 entre une position de blocage dans laquelle le premier axe de blocage 16a est en regard d'une face supérieure 27 de la première biellette 11 (figure 6) et une position de déblocage dans laquelle le premier axe de blocage 16a est en appui de contact contre une face latérale 28 de la première biellette 11 (figure 8).

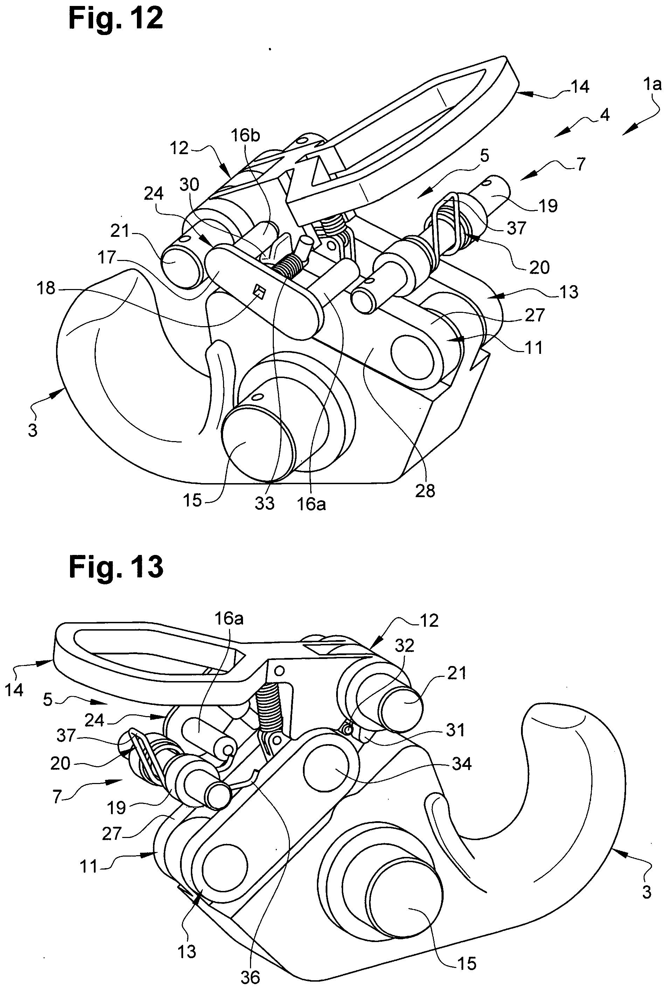

Les moyens de blocage 6 comprennent également des moyens de rappel élastique de l'élément de blocage 24 vers sa position de blocage. Ces moyens de rappel comprennent un ressort en traction 33 (figure 12) dont une extrémité est solidaire du bâti 2 et dont l'extrémité opposée est solidaire d'une oreille 18 ménagée dans la platine de liaison 17.

L'élément de blocage 24 est actionnable vers sa position de déblocage via les moyens de dégagement 9. Ces moyens de dégagement comprennent une rainure en forme de rampe 9 ménagée dans une paroi latérale de la poignée 14, rampe dans laquelle le second axe de blocage 16b est logé lorsque les moyens de libération 8 sont entre leur position de maintien sécurisé et une position intermédiaire représentée sur les figures 5, 7 et 10. Le second d'axe de blocage 16b coopère donc activement avec la rampe 9 pour permettre le déblocage du premier axe de blocage 16a et le dégager de la surface supérieure 27 de la première biellette 11.

En référence aux figures 3 à 11, l'actionnement du crochet 3 de sa position d'accouplement vers sa position de séparation va maintenant être décrit.

Lorsque le crochet 3 est dans sa position d'accouplement, l'utilisateur peut actionner la poignée 14 à pivotement autour de son axe 21 pour déplacer le crochet à pivotement 3 vers sa position de séparation. Les figures 3, 6 et 9 représentent le crochet 3 dans sa position d'accouplement, les moyens de blocage 6 étant dans leur position de blocage des biellettes 11, 12 et les moyens de libération 8 étant dans leur position de maintien sécurisée du crochet 3. Les figures 5, 8 et 11 représentent le crochet 3 dans sa position de séparation, les moyens de libération 8 étant dans leur position de libération et les moyens de blocage 6 dans leur position de déblocage. Enfin, les figures 4, 7 et 10 représentent les moyens de libération 8 dans une position intermédiaire entre la position de libération et la position de maintien sécurisée, dans laquelle le crochet 3 est dans sa position d'accouplement et les moyens de blocage 6 dans leur position de déblocage.

En référence aux figures 3, 6 et 9, lorsque le crochet 3 est en position d'accouplement et les moyens de libération 8 dans leur position de maintien sécurisé, les trois biellettes 11, 12, 13 sont dans une configuration sensiblement alignée. De manière particulièrement avantageuse, les biellettes 11, 12, 13 sont légèrement arc-boutées contre la chape 2 autour de l'axe 34. Les première et seconde biellettes 11, 12 forment ainsi un angle d'environ 175°, le sommet de cet angle étant dirigé vers le crochet 3. Ainsi, si une force est exercée par l'anneau d'attelage 23 sur la partie courbée du crochet 3 en position d'accouplement, l'arcboutement des biellettes 11, 12, 13 contre le crochet 3 empêche tout mouvement dudit crochet 3 vers sa position de séparation. En d'autres termes, cet arcboutement assure l'irréversibilité du mouvement du crochet 3 amené dans sa position d'accouplement, en particulier quand une force tendant à déplacer le crochet 3 vers sa position de séparation est appliquée directement sur ledit crochet 3.

En outre, les moyens de rappel élastique 7 comprennent un axe 19 logé dans le bâti 2 en regard des première et troisième biellettes 11, 13, ainsi qu'un ressort 20 entourant l'axe 19, lequel ressort 20 comprend deux jambes 36 respectivement en appui de contact contre la première 11 et troisième 13 biellettes et une portion en forme de U 37 en appui de contact contre le bâti 2. Une force est ainsi exercée par le ressort 20 contre les biellettes 11, 13, maintenant ainsi lesdites biellettes 11 - 13 en appui de contact contre la chape 2 pour éviter que ledit crochet 3 ne pivote vers sa position de séparation. La biellette 12 est également en appui de contact contre la chape 2.

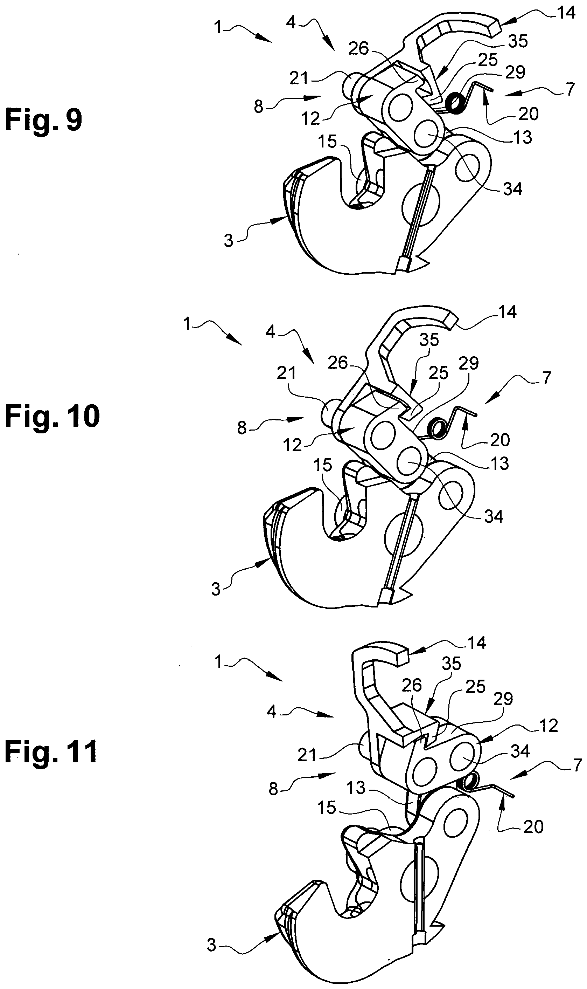

En référence à la figure 9, la deuxième biellette 12 comprend un épaulement en saillie 26 qui est logé dans un coude 35 coopérant ménagé dans le corps de la poignée 14. Ce coude 35 comprend une partie inférieure formant butée 25 en regard de l'épaulement en saillie 26 de la deuxième biellette 12. Lorsque le crochet 3 est dans sa position d'accouplement, l'épaulement 26 est à distance de la butée 25.

Lorsqu'un utilisateur actionne la poignée 14 pour amener le crochet 3 dans sa position de séparation, la force appliquée par l'utilisateur étant supérieure à la force exercée par les moyens de rappel élastique 7 sur les premières et troisième biellettes 11, 13, ladite poignée 14 pivote autour de son axe 21, provoquant concomitamment :
- Le rapprochement entre la butée 25 de la poignée 14 et l'épaulement 26 de la deuxième biellette 12, et
- Le glissement du second axe de blocage 16b le long de la rampe 9.

A cause de la pente de la rampe 9, le pivotement de la poignée 14 provoque le déplacement du second axe de blocage 16b et de l'élément de blocage 24 vers l'extérieur du bâti 2, à l'encontre du ressort de rappel considéré 33. Le premier axe de blocage 16a se déplace donc concomitamment le long de la face supérieure 27 de la première biellette 11.

La poignée 14 continuant son pivotement autour de son axe 21, les moyens de libération 8 arrivent dans leur position intermédiaire représentée sur les figures 4, 7 et 10. Le second axe de blocage 16b est au niveau de l'extrémité libre de la rampe 9 et le premier axe de blocage 16a est totalement dégagé de la face supérieure 27 de la première biellette 11. Les moyens de blocage 6 sont ainsi dans leur position de déblocage, autrement dit la première sécurité est levée par le déplacement de la poignée 14 depuis la position de maintien sécurisée vers la position intermédiaire des moyens de libération 8.

En outre, la butée 25 de la poignée 14 affleure l'épaulement 26 de la deuxième biellette 12. Les première, deuxième et troisième biellettes 11, 12, 13 demeurent dans leur configuration alignée et le crochet 3 dans sa position d'accouplement. Enfin, les moyens de rappel élastique 7 continuent d'exercer une force contre les premières et troisième biellettes 11, 13.

La poignée 14 continuant son pivotement autour de son axe 21, la butée 25 de ladite poignée 14 vient en appui de contact contre l'épaulement 26 de la deuxième biellette 12 : le pivotement de la poignée 14 autour de son axe 21 entraine donc le pivotement de la deuxième biellette 12 autour du même axe 21. Par réaction, la première biellette 11 pivote autour de ses deux axes (c'est-à-dire l'axe de liaison à pivotement 34 à la deuxième biellette 12 et l'axe de liaison à pivotement au crochet 3. Les première, deuxième et troisième biellettes 11, 12, 13 passent ainsi vers leur configuration non alignée alors que les moyens de libération 8 se déplacent vers leur position de libération, telles que représentées aux figures 5, 8 et 11.

Concomitamment, le déplacement des biellettes 11, 12, 13 de leur configuration alignée vers leur configuration non alignée dû à l'actionnement de la poignée 14 autour de son axe 21, provoque l'apparition d'une force de traction sur l'axe de pivotement reliant le crochet 3 aux première et troisième biellettes 11, 13, laquelle force est dirigée vers l'axe de pivotement 21 de la poignée 14. Cette force exerce ainsi un bras de levier autour de l'axe de pivotement 15 du crochet 3 qui pivote vers sa position de séparation.

Par ailleurs, le second axe de blocage 16b des moyens de blocage 6 ayant quitté la rampe 9, ce dernier ne permet plus le maintien des moyens de blocage 6 dans leur position de déblocage : cette position est maintenue par le premier axe de blocage 16a dont l'extrémité libre est en appui de contact contre la face latérale 28 de la première biellette 11.

Enfin, la configuration non alignée des biellettes 11 - 13 empêche les moyens de rappel élastique 7 de ramener lesdites biellettes 11 - 13 vers leur configuration alignée. Plus précisément, il existe une position de bascule des moyens de libération 8, située entre leur position intermédiaire et leur position de libération.

Entre la position intermédiaire et la position de bascule, la force exercée par les moyens de rappel 7 sur les premières et troisième biellette 11, 13 va tendre à ramener les biellettes 11 - 13 dans leur configuration alignée , et par la même à maintenir le crochet 3 dans sa positon d'accouplement.

Au-delà de la position de bascule, la force exercée par les moyens de rappel 7, et en particulier le ressort 20, sur les premières et troisième biellettes 11, 13 par les jambes 36 du ressort 20 et sur la chape par la portion en U 37 du ressort 20 va tendre à amener les biellettes 11 - 13 vers leur configuration non alignée, et par la même à maintenir le crochet 3 dans sa position de séparation. (Le poids du crochet maintient en position de séparation).

A l'inverse, lorsque l'utilisateur veut refermer le système d'attelage 1 et donc provoquer le pivotement du crochet 3 de sa position de séparation vers sa position d'accouplement, l'utilisateur fait pivoter la poignée 14 au tour de son axe 21 dans l'autre sens.

Les moyens de délivrance 10 passent d'abord de leur position de libération vers leur position intermédiaire : la butée 25 de la poignée 14 vient en appui de contact contre la face supérieure 29 de la deuxième biellette 12, provoquant concomitamment :
- le déplacement des biellettes 11 - 13 de leur configuration non alignée vers leur configuration alignée, et
- le pivotement du crochet 3 de sa position de séparation vers sa position d'accouplement.

Arrivée dans la position intermédiaire des moyens de libération 8, le second axe de blocage 16b des moyens de blocage 6 - alors en position de déblocage - se retrouve au niveau de l'extrémité libre de la rampe 9, tandis que le premier axe de blocage 16a se retrouve dégagé à la fois de la face supérieure 27 et de la face latérale 28 de la première biellette 11.

Les moyens de rappel 7 exercent quant à eux de manière continue la force de rappel contre les première et troisième biellettes 11, 13.

L'utilisateur poursuivant le mouvement de la poignée 14 de sorte que les moyens de libération 8 passent de leur position intermédiaire vers leur position de maintien sécurisée, le second axe de blocage 16b des moyen de blocage 6 se déplace le long de la rampe 9, et l'action des moyens de rappel considérés 33 provoque le déplacement de l'élément de blocage 24 vers leur position de blocage, c'est-à-dire que le premier axe de blocage 16a se déplace le long de la face supérieure 27 de la première biellette 11 : une fois les moyens de libération 8 dans leur position de maintien sécurisée, la première sécurité est alors réenclenchée et le crochet 3 maintenu de manière sécurisée dans sa position d'accouplement.

Enfin et de manière particulièrement avantageuse, le châssis 2 du système d'attelage 1 de l'invention comprend un premier plan de symétrie, lequel premier plan de symétrie est confondu avec un second plan de symétrie de la poignée d'actionnement 14. La poignée 14 est donc positionnée de manière centrale et accessible par le haut dans le système d'attelage 1, ce qui procure une excellente ergonomie au système 1 lorsque l'utilisateur doit actionner le crochet de sa position d'accouplement à sa position de séparation et inversement.

Le système d'attelage de l'invention permet ainsi à un utilisateur d'actionner le pivotement du crochet 3 en un seul mouvement de libération, en actionnant de manière consécutive les moyens de dégagement 9 et les moyens de délivrance 10 et débloquant successivement les deux sécurités.

Les figures 12 et 13 représentent le système d'attelage 1a selon un second mode de réalisation.

Le fonctionnement du système d'attelage 1 décrit ci-dessus en référence aux figures 1 à 11 s'applique également au système d'attelage 1a du second mode de réalisation. Ce second mode présente des différence structurelles qui vont être décrites ci-dessous.

En référence à la figure 12, les moyens de dégagement présentent la forme d'une came 30 qui fait saillie de la paroi latérale de la poignée 14. Ainsi, lorsque la poignée 14 pivote entre la position de maintien sécurisé et la position intermédiaire des moyens de délivrance 8, la came 30 provoque le déplacement du second axe de blocage 16b et de tout l'élément de blocage 24 vers sa position de déblocage.

En référence à la figure 13, les moyens de délivrance 8 comprennent au moins un plot 32 faisant saillie de la première et/ou de la troisième biellettes 11, 13, ainsi qu'un ergo 31 solidaire de la poignée 14 : lorsque les moyens de délivrance 8 sont dans leur position de maintien sécurisé, l'ergot 31 est à distance du plot 32 (figure 13). Lorsque les moyens de libération 8 sont en position intermédiaire, l'ergot 31 vient à l'affleurement du plot en saillie 32. Enfin, lorsque l'utilisateur actionne la poignée 14 pour déplacer les moyens de délivrance 8 de la position intermédiaire vers la position de libération, l'ergot 31 vient en appui de contact contre le plot 32, ce qui provoque le déplacement des biellettes 11 - 13 de leur configuration alignée vers leur configuration non alignée.

## Revendications

1. Système d'attelage (1, 1a) comprenant un bâti (2), un crochet d'attelage (3) monté à pivotement dans le bâti (2) autour d'un axe (15) entre une position d'accouplement et une position de séparation, et un dispositif de libération sécurisée (4) du crochet (3) monté dans le bâti (2) et relié au crochet (3), lequel dispositif de libération sécurisée (4) comprend des moyens de maintien sécurisé (5) du crochet dans sa position d'accouplement, comportant :
• des moyens de blocage (6) du pivotement du crochet (3) vers sa position de séparation, lesquels moyens de blocage (6) sont actionnables entre une position de blocage et une position de déblocage, et
• des moyens de rappel élastique (7) exerçant une force de maintien du crochet (3) dans sa position d'accouplement,
**caractérisé en ce que** le dispositif de libération sécurisée (4) comprend en outre des moyens de libération (8) des moyens de maintien sécurisé (5) actionnables de manière continue entre une position de maintien sécurisé du crochet (3) dans sa position d'accouplement dans laquelle les moyens de blocage (6) sont dans leur position de blocage et les moyens de rappel élastique (7) exercent la force de maintien du crochet (3) dans sa position d'accouplement, et une position de libération dudit crochet (3) dans sa position de séparation dans laquelle les moyens de blocage (6) sont dans leur position de déblocage, en passant par une position intermédiaire de dégagement dans laquelle les moyens de blocage (6) sont en position de déblocage et les moyens de rappel élastique (7) continuent à exercer la force de maintien du crochet (3) dans sa position d'accouplement, les moyens de libération sécurisée (8) comportant :
• des moyens de dégagement (9) des moyens de blocage (6) vers leur position de déblocage lorsque les moyens de libération (8) se déplacent depuis leur position de maintien sécurisé vers leur position intermédiaire de dégagement, les moyens de rappel élastique (7) exerçant la force de maintien du crochet (3) dans sa position d'accouplement,
• des moyens de délivrance (10) des moyens de rappel élastique (7) exerçant une force de délivrance sur lesdits moyens de rappel élastique (7) depuis la position intermédiaire desdits moyens de libération sécurisée (8) jusqu'à leur position de libération, laquelle force de délivrance est antagoniste et supérieure à la force de maintien exercée par lesdits moyens de rappel élastique (7),
les moyens de libération (8) étant configurés pour que les moyens de dégagement (9) et les moyens de délivrance (10) soient actionnés successivement et de manière continue.

2. Système d'attelage (1, 1a) selon la revendication précédente, **caractérisé en ce que** les moyens de délivrance (10) exercent automatiquement la force de délivrance sur les moyens de rappel élastique (7) à partir d'une position de bascule des moyens de libération (8) située entre leur position intermédiaire et leur position de libération.

3. Système d'attelage (1, 1a) selon la revendication 1 ou 2, **caractérisé en ce que** les moyens de libération (8) sont montés à pivotement dans le bâti (2), et **en ce que** la force de délivrance exerce un bras de levier autour du pivot (21) des moyens de libération (8) et de l'axe de pivotement (15) du crochet (3) lors de l'actionnement de la position intermédiaire vers la position de libération des moyens de libération (8).

4. Système d'attelage (1, 1a) selon la revendication précédente, **caractérisé en ce que** les moyens de libération (8) sont reliés à pivotement au crochet (3), et **en ce que** les moyens de délivrance (10) des moyens de rappel élastique (7) comprennent au moins deux organes de délivrance (11, 12, 13) reliés entre eux à pivotement et actionnables entre :
• Une configuration sensiblement alignée lorsque les moyens de libération (8) sont entre leur position de maintien sécurisé et leur position intermédiaire, et
• Une configuration non alignée lorsque les moyens de libération (8) sont entre leur position intermédiaire et leur position de libération, l'actionnement des organes de délivrance (11, 12, 13) de leur position alignée vers leur position non alignée entraînant concomitamment audit actionnement le pivotement du crochet (3) autour de son axe (15) depuis sa position d'accouplement vers sa position de séparation.

5. Système d'attelage (1, 1a) selon la revendication précédente, **caractérisé en ce que** les moyens de délivrance (10) comprennent au moins une première biellette (11) dont une extrémité est reliée à pivotement au crochet (3), et une seconde biellette (12) dont une extrémité est reliée à pivotement au bâti (2), lesquelles biellettes (11, 12) forment tout ou partie des organes de délivrance et sont en outre reliées à pivotement entre elles par leurs extrémités opposées respectives et actionnables entre la configuration alignée lorsque les moyens de libération (8) sont entre leur position de maintien sécurisé et leur position intermédiaire, et la configuration non-alignée concomitamment à l'actionnement des moyens de libération (8) de leur position intermédiaire vers leur position de libération.

6. Système d'attelage (1, 1a) selon la revendication précédente, **caractérisé en ce que** les moyens de délivrance (10) comprennent une troisième biellette (13) parallèle à la première biellette (11) et dont les extrémités sont reliées à pivotement respectivement à la deuxième biellette (12) et au crochet (3).

7. Système d'attelage (1, 1a) selon l'une quelconque des revendications précédentes, **caractérisé en ce que** le dispositif de libération sécurisée (4) comprend une poignée d'actionnement (14) des moyens de libération (8) entre leur position de maintien sécurisée et leur position de libération, laquelle poignée (14) est reliée à pivotement aux moyens de délivrance (10) par le pivot (21) des moyens de libération (8).

8. Système d'attelage (1, 1a) selon la revendication précédente, **caractérisé en ce que** les moyens de blocage (6) comprennent un élément de blocage (24) muni d'au moins un axe de blocage (16a), lequel élément de blocage (24) est actionnable à translation par les moyens de dégagement (9) entre la position de blocage dans laquelle l'axe de blocage (16a) est en regard de la première biellette (11) des moyens de délivrance (10), et la position de déblocage dans laquelle l'axe de blocage (16a) est dégagé de ladite première biellette (11).

9. Système d'attelage (1, 1a) selon la revendication précédente, **caractérisé en ce que** l'élément de blocage (24) comprend un second axe de blocage (16b), les deux axes (16a, 16b) étant parallèles entre eux et solidarisés par une platine de liaison (17) de l'élément de blocage (24), et **en ce que** les moyens de dégagement (9) comprennent une rainure en forme de rampe ménagée dans la paroi de la poignée (14) dans laquelle le second axe (16b) est logé lorsque les moyens de libération (8) sont entre leur position de maintien sécurisé et leur position intermédiaire, les moyens de blocage (6) étant dans leur position de déblocage lorsque le second axe (16b) est à l'extrémité libre de la rampe.

10. Système d'attelage (1, 1a) selon l'une quelconque des revendications 7 à 9, **caractérisé en ce que** le châssis 2 et la poignée d'actionnement 14 comprennent respectivement un premier et un second plans de symétrie, et **en ce que** les premier et second plans de symétrie sont confondus.

11. Système d'attelage (1, 1a) selon l'une quelconque des revendications 5 à 10, **caractérisé en ce que** les moyens de rappel élastique (7) comprennent un axe (19) logé dans le bâti (2) et au moins un ressort (20) en appui contre au moins la première biellette (11) et le bâti (2).

12. Système d'attelage (1, 1a) selon l'une quelconque des revendications précédentes, **caractérisé en ce que** les moyens de blocage (6) comprennent un moyen de rappel élastique (18) vers leur position de blocage.

13. Système d'attelage (1, 1a) selon l'une quelconque des revendications précédentes, **caractérisé en ce que** les moyens de rappel élastique (7) exercent la force de rappel contre les moyens de délivrance (10).
